# EUROPEAN PATENT APPLICATION

(11) **EP 0 547 866 A1**
(43) Date of publication of application: **23.06.1993**
(21) Application number: 92311423.5
(22) Date of filing: 15.12.1992
(51) Int. Cl.: F16K 31/02, F16F 9/53

(54) **Valve**

(30) Priority: 18.12.1991 GB 9126849
(71) Applicant: ADVANCED FLUID SYSTEMS LIMITED, London SW8 4TJ (GB)
(72) Inventor: Brooks, Douglas Alan, c/o Advanced Fluid Sys. Ltd., London SW8 4TJ (GB); Bach, Girard Ian, c/o Advanced Fluid Sys. Ltd., London SW8 4TJ (GB)
(74) Representative: Pearce, Anthony Richmond

(57) **Abstract**

A flow control valve for controlling the flow of a fluid has a body (10) with first and second ports (12 ;14). A flow passage (16) extends between the ports (12 ;14) and has a valve seat (18) therein. A valve closure member (20) is moveable into and out of sealing engagement with said valve seat (18) for controlling the flow of fluid in use in said passage (16). An electro-rheological (ER) fluid provides a control of the movement of the valve closure member (20) in at least one direction by acting in compression between an electrode (30) movable with the valve closure member (20) and a fixed electrode (36).

## Description

This invention relates to a valve and is more particularly concerned with a flow control valve of the type comprising a body having first and second ports therein, a flow passage extending between said first and second ports, a valve seat in said flow passage, and a valve closure member moveable into and out of sealing engagement with said valve seat for controlling flow of fluid in use in said passage. The present invention is also concerned with the use of such a flow control valve in a damper.

In some types of flow control valves, the valve closure member is biassed, eg by a spring, into sealing engagement with the valve seat so that the flow control valve acts as a one way valve or as a pressure relief valve. In other types of flow control valve, the valve closure member is biassed out of engagement with the valve seat so that it is normally open. It is also per se known for flow control valves to be provided wherein the valve closure member is controlled electrically by means of an electromagnet. However, these are relatively complicated and often require expensive components. Additionally, these components introduce phase lags into the system. This can make control difficult in cases where a very fast response in required.

An object of the present invention is to provide a flow control valve wherein a fast response can be achieved under electrical control.

According to the present invention, there is provided a flow control valve comprising a body having first and second ports therein, a flow passage extending between said first and second ports, a valve seat in said passage, and a valve closure member moveable into and out of sealing engagement with said valve seat for controlling the flow of fluid in use in said passage, characterised by the use of an electro-rheological fluid to provide a control of the movement of the valve closure member in at least one direction.

Electro-rheological (ER) fluids are known per se which possess the ability to change from a normal liquid state to a solid state in response to the application of an electric field. Such ER fluids generally contain micron-sized particles in suspension. It is per se known to provide a flow control valve for controlling the flow of an ER fluid by causing such fluid to pass through a narrow gap between two electrodes. Upon application of a voltage across the electrodes, an electrical field is produced which changes the fluid from its normal liquid state to a solid state with very little time lag. Whilst this is satisfactory arrangement for controlling and stopping low pressures such an arrangement, with the current generation of electro-rheological fluids, is incapable of controlling and stopping high pressures commonly found in conventional hydraulic systems. Hence the arrangements has limited applicability.

In accordance with the present invention, depending upon how the ER fluid is used to control movement of the valve seat, various types of flow control valve can be provided.

In one embodiment, the valve closure member is biassed into a direction away from the valve seat by suitable mechanical biassing means, eg a spring. In the case where the biassing means only applies a very light opening force to the valve closure member, it will be appreciated that the flow control valve acts as a non-return valve since the valve closure member will be urged into engagement with the valve seat against the action of the biassing means even under a slight flow in the reverse direction. With such a valve, in accordance with the present invention, movement of the valve closure member against the action of the biassing means can be controlled by the use of an ERfluid which, conveniently, is provided between an electrode which is mounted for movement with the valve closure member and a fixed electrode disposed in the path of movement of the first electrode but spaced therefrom by a distance which permits the valve closure member to engage against the valve seat. With such an arrangement, application of a voltage across the electrodes will cause the ER fluid to change to a solid state, thereby to resist (and particularly prevent) complete closure of the valve closure member against the valve seat. In this way, a controlled flow in the reverse direction of fluid being controlled by the valve can be effected. With such an arrangement, it is possible for the fluid controlled by the valve itself to be an ER fluid which may be in communication with the ER fluid between the electrodes, provided of course that the electrodes are located at a position in which they do not change the main body of the fluid flowing through the valve into a solid state. Alternatively, the ER fluid between the electrodes may be separated from the fluid being controlled by the valve. In this latter case, the fluid being controlled by the valve may be of a completely different type of fluid, eg it may be an ordinary hydraulic fluid, airorotherflu- id medium such as powder.

In a further embodiment, instead of being biassed by resilient means, the valve closure member may merely be freely movable in response to pressure differential across it.

In the above-described embodiments, the ERfluid is disposed to be acted upon in compression, and this is the preferred arrangement because it is found that the ER fluid can withstand rather greater compression forces than shear forces. However, it is within the scope of the present invention to provide for an arrangement in which the ER fluid is acted upon in shear either instead of or in addition to compression.

In a modification, control of the movement of the valve closure member by the ER fluid is effected through the intermediary of a piston operating in a cylinder having fluid input and output ports, wherein flow of fluid into and/or out of the cylinder is controlled by the ER fluid.

It is also within the scope of the present invention to provide for bidirectional flow using either two valves or a single valve with a suitable network of check valves.

It will be appreciated that, inter alia, the valve of the present invention can be arranged so that when an electrical signal is applied to the ER fluid, flow in either direction is allowed and, with the signal removed, it can either allow flow in one direction only or allows no flow in both directions depending upon the particular arrangement.

The electrical signal applied to the ER fluid may be any type of field to which the ER fluid is capable of responding, eg a dc, ac or pulsed dc field.

The present invention also resides in a damper including a flow control valve according to the present invention, the damper preferably being of the type using an ER fluid for damping and comprising a cylinder, a damping piston moveable in the cylinder, and flow control means including electrodes with a passage therebetween for flow of ER fluid between opposite ends of the cylinder, the flow control valve being disposed in series with the flow control means. With such an arrangement, whilst the flow control means may be operable to prevent flow of the ER fluid in at least one direction, it is not as capable of resisting extreme pressures as the mechanical valve closure member used in the valve of the present invention.

Embodiments of the present invention will now be described, by way of example, with reference to the accompanying drawings, in which:-
Figures 1 to 4 are axial sections through first to fourth embodiments of valves according to the present invention, and
Figure 5 is an axial section through a damper including a valve according to the present invention.

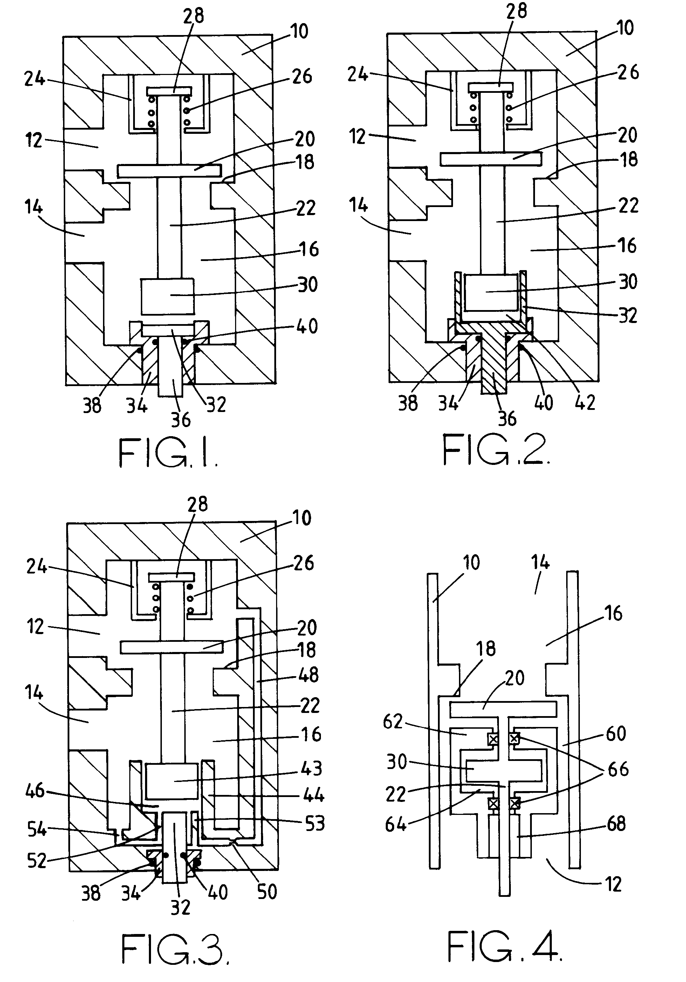

Referring now to Figure 1, the valve comprises a body 10 having first and second ports 12 and 14 and a chamber 16 defining a flow passage between the first and second ports 12 and 14. Within the chamber 16, there is defined a valve seat 18 lying between the ports 12 and 14.

A valve closure member20 is disposed within the chamber 16 for movement into and out of sealing engagement with the valve seat 18. The valve closure member 20 is mounted on a spindle 22 whose upper end (as viewed in Figure 1) extends into a cup 24 fixed relative to the body 10. A compression spring 26 is lodged between the cup 24 and a head 28 on the spindle 22 and thereby serves to urge the valve closure member 20 away from the valve seat 18. The lower end (as viewed in Figure 1) of the spindle 22 has an electrode 30 fixed thereto so as to be moveable with the valve closure member 20. This moveable electrode 30 is disposed opposite a fixed electrode 32 carried by an electrically insulating bush 34 in the body 10. The fixed electrode 32 has an upper surface which extends transversely relative to the direction of movement of the spindle 22. The moveable electrode 30 has a corresponding lower surface which extends parallel to the upper surface of the fixed electrode 32. The fixed electrode 32 has an electrical terminal 36. Electrical connection to the electrode 30 is by any suitable means (not shown), eg via spindle 22, spring 26, cup 24 and body 10. The assembly of fixed electrode 32, terminal 36 and bush 34 are sealed by O-ring seals 38,40.

In use, the valve is used to control an ER fluid which fills the chamber 16 and whose flow between the first and second ports 12 and 14 is to be controlled by the valve. It will be appreciated that the ER fluid, in filling the chamber 16, forms a thin layer between the moveable electrode 30 and the fixed electrode 32.

When there is no flow of ER fluid between the ports 12 and 14, the valve closure member20 is urged by the spring 26 (which is a light spring in this embodiment) so that it is out of engagement with the valve seat 18, the valve thus being open. The valve remains open whilst there is a flow of ER fluid in the chamber 16 from the second port 14 to the first port 12 since the resultant force applied thereby on the valve closure member 20 augments the action of the spring 26 in maintaining the valve open. When there is a flow of ER fluid within the chamber 16 from the first port 12 to the second port 14, above a predetermined rate, the force of the ER fluid acting on the valve closure member 20 in opposition to the spring 26 exceeds that of the spring 26 with the result that the valve closure member 20 is moved so as to seal against the valve seat 18 and prevent flow of ER fluid in this direction. The valve therefore acts as a non-return valve when there is no electrical field applied across the electrodes 30 and 32. In this respect, it will be appreciated that the ER fluid lying between the electrodes 30 and 32 is liquid and capable of being displaced laterally as the electrode 30 approaches the electrode 32. On the other hand, if an electrical field is applied across the electrode 30 and 32 with the valve in the open condition, that portion of the ERfluid which lies between the electrodes 30 and 32 solidifies so that it can no longer flow laterally under the action of compressive forces. It will thus be appreciated that, under these conditions, the valve is maintained open so that flow of ER fluid from the first port 12 to the second port 14 within the chamber 16 is permitted. In this respect, it is also to be appreciated that the main bulk of the ER fluid in the chamber 16 is not rendered solid and is therefore free to flow.

Referring now to Figure 2, where similar parts to the valve of Figure 1 are accorded the same reference numerals, the mode of operation is exactly the same except that the fixed electrode 32 takes form of a cup in which the moveable electrode 30 is disposed with an all-round clearance 42. In this embodiment, the ER fluid within the gap 42 is acted upon in both compression and shear and so is capable of resisting rather higher closing forces than is the case in the embodiment in Figure 1.

Referring now to Figure 3, the moveable electrode 30 is dispensed with an replaced by a piston 43 which is a close sliding fit within a cylinder 44 defined within the body 10. The space 46 within the cylinder 44 below the piston 43 communicates with the region of the chamber 16 above the valve seat 18 by means of a passage 48 having a restricted orifice 50 therein. The region 46 also communicates with the region of the chamber 16 below the valve seat 18 through an annular orifice 52 whose internal periphery is defined by electrode 32 and whose external periphery is defined by an annular electrode 53 which is integral with the cylinder 44. The annular orifice 52 communicates with that region of the chamber 16 which lies underthe valve seat 18 by means of a passage 54.

When an electrical field is not applied between the electrodes 32 and 53, the valve acts as a non-return valve in a similarway to the valve of Figures 1 and 2 since flow of ER fluid from the region 46 is readily permitted through annular gap 52 and passage 54 as the valve closure member 20 moves downwardly into engagement with the valve seat 18. In this mode, a limited flow of ER fluid is also permitted through passage 48 with restricted orifice 50. When the valve closure member 20 is sealed against the valve seat 18, the underside of the piston 43 closes the annular gap 52 and thereby prevents flow of ERfluid from passage 48 into the annular orifice 52. The valve thus acts as a non-return valve in this mode of operation.

On the other hand, under the conditions where (a) the valve is in an open condition, (b) there is a flow within the passage 16 from the first port 12 to the second port 14 and (c) an electrical field is applied to the electrodes 32 and 53, the ER fluid within the annular orifice 52 between the electrodes 52 and 53 is solidified so that the ER fluid from region 46 can only be exhausted through passage 48 with restricted orifice 50. Under these circumstances, it will be appreciated that the closing of the valve is delayed.

Referring now to Figure 4, parts of the valve which are similar to those of Figs 1 to 3 are accorded the same reference numerals. In this embodiment, first and second ports 12 and 14 are provided at opposite axial ends of body 10 which is generally cylindrical. The valve is designed for controlling the flow of a fluid which is not necessarily an ER fluid, but which contains a unit indicated generally by arrow 60 containing ER fluid for enabling a control of the valve. In this embodiment, unit 60 is a separately produced unit which can be inserted into the body 10 for enabling a control of the flow of fluid (eg conventional hydraulic fluid) through the body 10. The unit 60 comprises a housing 62 having a chamber 64 containing an ER fluid. Spindle 22 is slidable relative to housing 62, and seals 66 are provided for sealing the chamber 64 from the chamber 16 in which the fluid being controlled by the valve exists. A bearing 68 supports the spindle 22 freely for sliding movement 22 under the action of forces applied to the valve closure member 20 by the fluid flowing in chamber 16. In this embodiment, electrode 30 moveable with spindle 22 is disposed within chamber 64, and the housing 62 itself serves as another electrode.

When an electrical field is not applied across the chamber 64 containing the ER fluid, the valve closure member 20 is free to move and closes against the valve seat 18 when there is a flow in the chamber 16 of fluid from the first port 12 to the second port 14. Conversely, when flow occurs in the opposite direction in chamber 16, the valve closure member 20 is moved away from valve seat 18 to permit flow.

When an electrical field is applied between the housing 62 and electrode 30 across the ER fluid in chamber 64, the ER fluid solidifies to prevent movement of the valve closure member 20. Thus, in the event that the valve closure member 20 is sealed against valve seat 18, the valve will remain closed. In the event that the electrical field is applied when the valve closure member 20 is spaced from the valve seat 18, the valve will remain open irrespective of the direction of flow of fluid in the chamber 16.

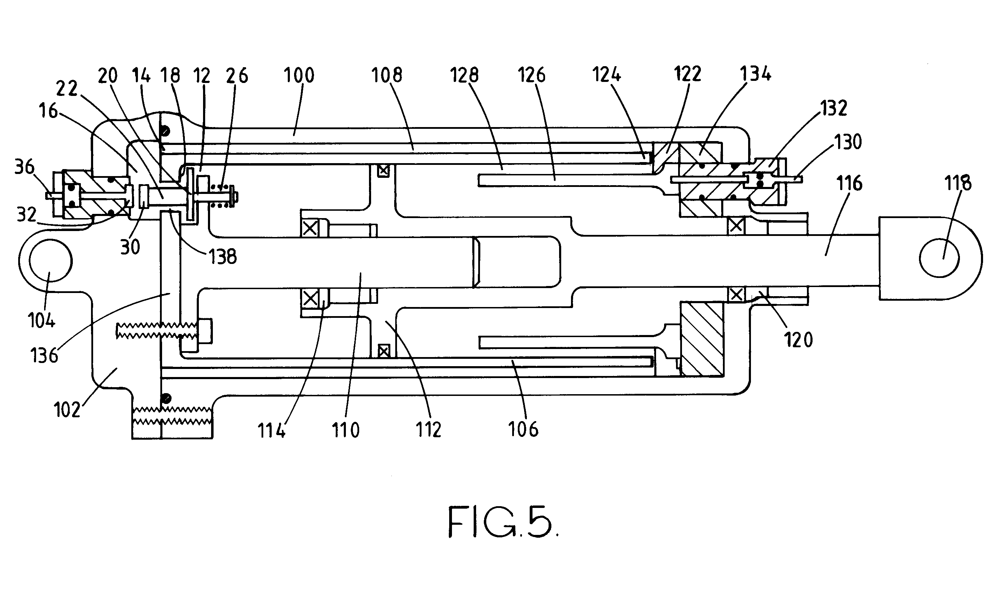

Referring now to Figure 5 of the drawings, there is shown a damper including a valve of a type similar to that illustrated and described above in relation to Figure 1. Parts of the valve used in the damper of Figure 5 which are similar to those of the valve of Fig. 1 are accorded the same reference numberals. The damper of Figure 5 comprises a body 100 with end cap 102 having trunnion 104, and a cylinder sleeve 106 is secured within body 100 so as to define an annular space 108 therebetween. Also secured within the housing 100 is a spigot 110 which extends axially within the cylindrical sleeve 106 and supports one end of a piston 112 via a bearing 114. The piston 112 has a piston rod 116 which extends through the end of the body 100 opposite to the end cap 102 and which carries a trunnion 118. A bearing 120 supports the piston rod 116. At its end remote from the end cap 102, the cylinder sleeve 106 abuts against an annular seal 122 but has a series of slots 124 therein to provide communication between the annular space 108 and the interior of the cylinder sleeve 106. Disposed concentrically within the cylinder sleeve 106 is an annular electrode 126 so as to define an annular space 128 between it and the cylinder sleeve 106. The annular space 128 is in communication with the annularspace 108 through the slots 124. The electrode 126 is connected with an electrical supply via terminal 130 which is mounted in an electrically insulating bush 132 sealed with the body 100 and with an internal electrically insulating sealing ring 134.

Adjacent the end cap 102, the cylinder sleeve 106 has an end plate 136 by which it is bolted to the latter. The end plate 136 has an aperture 138 therethrough and defines valve seat 18.

In use, when the valve is prevented from closing by applying an electrical field across the electrodes 30 and 32, movement of the piston 112 is permitted in either direction as a result of flow of ER fluid between opposite sides of the piston 112 in the appropriate direction through annular spaces 108 and 128, slots 124, ports 12 and 14 and chamber 16. The damping effect can be modified in a manner known per se applying an electrical field across electrode 126 and cylinder sleeve 106, thereby modifying the flow characteristics of ER fluid flowing through annular space 128. The resistance to flow is dependent upon the level of the electrical field applied.

When no electrical field is applied across electrodes 30 and 32, movement of the piston 112 to the right (ie extension of the piston rod 116) is permitted because the ER fluid flows into chamber 16 from second port 14 so as to augment the opening force applied to the valve closure member 20 by the spring 26. In the opposite direction of movement of the piston 112, flow of ER fluid through the first port 12 serves to move the valve closure member 20 against the action of spring 26 so as to seal the former against the valve seat 18, thereby locking the piston 112 against further movement in this direction. Once the valve closure member 20 has closed against valve seat 18, further movement of the piston 112 in this direction is prevented even if the electrical field across electrodes 30 and 32 is de-energised . However, when movement of the piston 112 in this direction stops or the piston 112 commences to move in the opposite direction, the valve closure member 20 is allowed or caused to open.

## Claims

1. A flow control valve comprising a body (10) having first and second ports (12;14) therein, a flow passage (16) extending between said first and second ports (12;14), a valve seat (18) in said passage (16), and a valve closure member (20) moveable into and out of sealing engagement with said valve seat (18) for controlling the flow of fluid in use in said passage (16), characterised by the use of an electro-rheological (ER) fluid to provide a control of the movement of the valve closure member (20) in at least one direction.

2. Aflow control valve as claimed in claim 1, wherein the ER fluid is disposed to be acted upon in compression.

3. A flow control valve as claimed in claim 1 or 2, wherein the valve closure member (20) is biassed into a direction away from the valve seat (18) by biassing means (26).

4. A flow control valve as claimed in claim 3, which acts as a non-return valve, and wherein movement of the valve closure member (20) against the action of the biassing means (26) is arranged to be controlled by the use of an ER fluid between an electrode (30) which is mounted for movement with the valve closure member (20) and a fixed electrode (32) disposed in the path of movement of the first-mentioned electrode (30) but spaced therefrom by a distance which permits the valve closure member (20) to engage against the valve seat (18).

5. A flow control valve as claimed in claim 1 or 2, wherein the valve closure member (20) is freely movable in response to pressure differential across it.

6. A flow control valve as claimed in claim 1, 2, 3 or 5, wherein control of the movement of the valve closure member (20) by the ER fluid is effected through the intermediary of a piston (43) operating in a cylinder (44) having fluid input and output ports (50,52), and wherein flow of fluid into and/or out of the cylinder (44) is controlled by the ER fluid.

7. A flow control valve as claimed in any preceding claim, which is for controlling the flow of an ER fluid which communicates with the first-mentioned ER fluid.

8. A flow control valve as claimed in any one of claims 1 to 6, which is for controlling the flow of a fluid, and wherein means (62,66) are provided for separating such fluid from said ER fluid.

9. A damper including a flow control valve as claimed in any preceding claim.

10. A damper as claimed in claim 9, which is of the type using an ER fluid for damping and comprising a cylinder (106), a damping piston (112) moveable in the cylinder (106), and flow control means including electrodes (126,106) with a passage (128) therebetween for flow of ER fluid between opposite ends of the cylinder (106), the flow control valve being disposed in series with said flow control means.
